# EUROPÄISCHE PATENTSCHRIFT

(11) **EP 3 661 830 B1**
(45) Veröffentlichungstag und Bekanntmachung des Hinweises auf die Patenterteilung: **10.11.2021**
(21) Anmeldenummer: 18781963.6
(22) Anmeldetag: 06.09.2018
(51) Int. Cl.: H04L 12/26, B61L 19/06, B61L 27/00

(54) **KONZEPT ZUM ÜBERWACHEN EINES AN EIN STELLWERK EINGEHENDEN NETZWERKVERKEHRS**
CONCEPT FOR MONITORING NETWORK TRAFFIC COMING INTO A SIGNAL BOX
CONCEPT POUR LA SURVEILLANCE D'UN TRAFIC RÉSEAU ENTRANT DANS UN POSTE D'AIGUILLAGE

(30) Priorität: 29.09.2017 DE 102017217422
(43) Veröffentlichungstag der Anmeldung: 10.06.2020
(73) Patentinhaber: Siemens Mobility GmbH, 81739 München (DE)
(72) Erfinder: AUST, Frank, 38239 Salzgitter (DE); SEIFERT, Matthias, 21244 Buchholz (DE)
(86) Internationale Anmeldenummer: PCT/EP2018/073989
(87) Internationale Veröffentlichungsnummer: WO 2019/063259

(56) Entgegenhaltungen:
- WO-A1-2016/119946
- KENDELBACHER D ET AL: "Ein Kommunikationsbasissystem für ETCS (Teil 1)", SIGNAL + DRAHT, DVV, Nr. 94, 1. Juni 2002 (2002-06-01), Seiten 6-11, XP002495555, ISSN: 0037-4997

## Beschreibung

Die Erfindung betrifft eine Vorrichtung und ein Verfahren zum Überwachen eines an ein Stellwerk einer Eisenbahnbetriebsanlage über ein Kommunikationsnetzwerk eingehenden Netzwerkverkehrs. Die Erfindung betrifft ferner ein Computerprogramm.

Eine gattungsgemäße Vorrichtung und ein gattungsgemäßes Verfahren sind aus der Druckschrift KENDELBACHER D. ET AL: "Ein Kommunikationsbasissystem für ETCS (Teil 1)", SIGNAL+ DRAHT, DW, Nr. 94, 1. Juni 2002 (2002-06-01), Seiten 6-11, XP002495555, ISSN: 0037-4997 bekannt. Bei der dort beschriebenen gattungsgemäßen Vorrichtung beziehungsweise bei dem dort beschriebenen gattungsgemäßen Verfahren kommen spezifische Übertragungsfunktionen, insbesondere spezifische Übertragungsprotokolle, zum Einsatz, welche die Authentizität und die Integrität von Verbindungen und Daten sichern.

Darüber hinaus ist aus der Druckschrift WO 2016/119946 A1 ein Steuersystem, beispielsweise an Bord eines Kraftfahrzeugs, bekannt, welches an einen Datenbus angeschlossen ist, über den es mit anderen Steuersystemen oder Steuergeräten kommunizieren kann, und welches eine verbesserte Fehleranalyse unterstützt.

In einem Kontrollzentrum einer Eisenbahnbetriebsanlage werden üblicherweise Computer-Workstations zur Einstellung von Fahrstraßen und zur Überwachung eines Eisenbahnverkehrs eingesetzt.

Bedienhandlungen, die beispielsweise mittels der Computer-Workstations vorgenommen werden und die sich beispielsweise auf einen Zustand eines Eisenbahnabschnittes auswirken, werden in der Regel durch ein Stellwerk der Eisenbahnbetriebsanlage, das für die Sicherheit die Verantwortung übernimmt, überwacht, bevor eine Änderung an Signalen, Fahrstraßen oder Fahrtfreigaben stattfindet.

Da in der Regel die Computer-Workstations und das Stellwerk an verschiedenen Orten sind, sind diese üblicherweise über ein Kommunikationsnetzwerk miteinander verbunden.

Das heißt also, dass das Stellwerk beispielsweise über ein Kommunikationsnetzwerk erreichbar ist.

Es besteht insofern ein Bedarf dafür, das Stellwerk vor einem über das Kommunikationsnetzwerk eingehenden Netzwerkverkehr zu schützen, welcher eine Sicherheit eines Betriebs der Eisenbahnbetriebsanlage gefährden könnte.

Die der Erfindung zugrunde liegende Aufgabe ist daher darin zu sehen, ein effizientes Konzept zum effizienten Überwachen eines an ein Stellwerk einer Eisenbahnbetriebsanlage über ein Kommunikationsnetzwerk eingehenden Netzwerkverkehrs bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird eine Vorrichtung zum Überwachen eines an ein Stellwerk einer Eisenbahnbetriebsanlage über ein Kommunikationsnetzwerk eingehenden Netzwerkverkehrs bereitgestellt, umfassend:
einen Netzwerk-TAP zum Mitlesen des über das Kommunikationsnetzwerk an das Stellwerk eingehenden Netzwerkverkehrs und
zum Ausgeben des mitgelesenen eingehenden Netzwerkverkehrs an einen Prozessor zum Prüfen des mitgelesenen eingehenden Netzwerkverkehrs und
eine Netztrenneinrichtung zum Trennen des Stellwerks von dem Kommunikationsnetzwerk,
wobei der Prozessor ausgebildet ist, basierend auf einem Ergebnis des Prüfens des mitgelesenen eingehenden Netzwerkverkehrs die Netztrenneinrichtung derart anzusteuern, dass die Netztrenneinrichtung das Stellwerk von dem Kommunikationsnetzwerk trennt und
wobei der Prozessor zum Prüfen des mitgelesenen eingehenden Netzwerkverkehrs ausgebildet ist, einen vom mitgelesenen eingehenden Netzwerkverkehr umfassten Kommandostrom auf unerlaubte Kommandos zu überprüfen und bei einem Erkennen eines unerlaubten Kommandos die Netztrenneinrichtung derart anzusteuern, dass die Netztrenneinrichtung das Stellwerk von dem Kommunikationsnetzwerk trennt.

Nach einem anderen Aspekt wird ein Verfahren zum Überwachen eines an ein Stellwerk einer Eisenbahnbetriebsanlage über ein Kommunikationsnetzwerk eingehenden Netzwerkverkehrs bereitgestellt, umfassend die folgenden Schritte:
Mitlesen des über das Kommunikationsnetzwerk an das Stellwerk eingehenden Netzwerkverkehrs,
Prüfen des mitgelesenen eingehenden Netzwerkverkehrs und Trennen des Stellwerks von dem Kommunikationsnetzwerk basierend auf einem Ergebnis des Prüfens des mitgelesenen eingehenden Netzwerkverkehrs,
wobei ein Prozessor zum Prüfen des mitgelesenen eingehenden Netzwerkverkehrs einen vom mitgelesenen eingehenden Netzwerkverkehr umfassten Kommandostrom auf unerlaubte Kommandos überprüft und bei einem Erkennen eines unerlaubten Kommandos eine Netztrenneinrichtung derart ansteuert, dass die Netztrenneinrichtung das Stellwerk von dem Kommunikationsnetzwerk trennt.

Nach einem weiteren Aspekt wird ein Computerprogramm bereitgestellt, welches Programmcode zur Durchführung des Verfahrens zum Überwachen eines an ein Stellwerk einer Eisenbahnbetriebsanlage über ein Kommunikationsnetzwerk eingehenden Netzwerkverkehrs umfasst, wenn das Computerprogramm auf einem Computer, beispielsweise auf der Vorrichtung zum Überwachen eines an ein Stellwerk einer Eisenbahnbetriebsanlage über ein Kommunikationsnetzwerk eingehenden Netzwerkverkehrs, ausgeführt wird.

Die Erfindung basiert auf der Erkenntnis, dass die obige Aufgabe dadurch gelöst wird, dass ein Netzwerk-TAP den eingehenden Netzwerkverkehr mitliest und an einen Prozessor zwecks Prüfen des eingehenden Netzwerkverkehrs ausgibt. Abhängig von einem Ergebnis des Prüfens wird dann das Stellwerk von dem Kommunikationsnetzwerk getrennt oder nicht.

Die Verwendung des Netzwerk-TAPs bietet insbesondere den technischen Vorteil, dass dieser im Kommunikationsnetzwerk unsichtbar ist und somit auch von keinem Angreifer erkannt und angegriffen werden kann.

Weiter weist die Verwendung eines Netzwerk-TAPs den technischen Vorteil auf, dass ein Mitlesen und insofern ein entsprechendes Prüfen des eingehenden Netzwerkverkehrs fast in Echtzeit ohne erhebliche zeitliche Verzögerung durchgeführt werden kann verglichen mit einem sogenannten "application level gateway (ALG)". Ein solches application level gateway kann zwar auch einen Netzwerkverkehr überprüfen, erzeugt hierbei aber stets einen erheblichen zeitlichen Versatz und verändert üblicherweise ein ursprünglich vorgesehenes Zeitverhalten. Der Zeitvorteil hängt beispielsweise vom Umfang der Prüfung ab, die durchgeführt wird. Dies kann bei ALGs ohne weiteres im Bereich mehrerer Millisekunden bis zu 500 ms liegen, was für eine Forderung nach verzögerungsfreier Übertragung nicht tolerierbar wäre. In einem ALG müssen Daten mehrfach hin- und her kopiert werden und durch den Prozessor geschleust werden, was an sich schon Zeitverluste einbringt. Dann kommt noch die eigentliche "Processing-Time", also die Verarbeitungszeit durch den Prozessor, hinzu. ALGs sind deshalb nicht besonders vorteilhaft.

Dadurch, dass das Stellwerk von dem Kommunikationsnetzwerk getrennt wird, wird insbesondere der technische Vorteil bewirkt, dass das Stellwerk dann nicht mehr über das Kommunikationsnetzwerk erreicht werden kann. Angreifer können somit das Stellwerk nicht mehr weiter über das Kommunikationsnetzwerk angreifen. Somit ist das Stellwerk in vorteilhafter Weise gegen Angriffe über das Kommunikationsnetzwerk effizient geschützt.

Somit wird also weiter insbesondere der technische Vorteil bewirkt, dass der an ein Stellwerk einer Eisenbahnbetriebsanlage über ein Kommunikationsnetzwerk eingehende Netzwerkverkehr effizient überwacht werden kann.

Ein Netzwerk-TAP im Sinne der Beschreibung stellt einen passiven Zugriffspunkt zu einer Netzwerkverbindung her, womit die über die Netzwerkverbindung übertragenen Datensignale (also beispielsweise der eingehende Netzwerkverkehr) zu Analysezwecken mitgelesen und ausgewertet werden können. Ein Netzwerk-TAP wird im Englischen als "network-TAP" bezeichnet.

Die Abkürzung "TAP" steht für "test access port".

Ein Netzwerk-TAP im Sinne der Beschreibung arbeitet auf dem OSI layer 1 (OSI-Schicht 1) und besitzt keine MAC-Adresse. Der Netzwerk-TAP ist somit im Kommunikationsnetzwerk unsichtbar.

Der Netzwerk-TAP kann insofern auch als ein passiver Netzwerk-TAP bezeichnet werden, insofern er den vorstehend beschriebenen passiven Zugriffspunkt herstellt.

Der Netzwerk-TAP kann beispielsweise auch als ein Ethernet-TAP bezeichnet werden.

Dadurch, dass der Prozessor zum Prüfen des mitgelesenen eingehenden Netzwerkverkehrs ausgebildet ist, einen vom mitgelesenen eingehenden Netzwerkverkehr umfassten Kommandostrom auf unerlaubte Kommandos zu überprüfen und bei einem Erkennen eines unerlaubten Kommandos die Netztrenneinrichtung derart anzusteuern, dass die Netztrenneinrichtung das Stellwerk von dem Kommunikationsnetzwerk trennt, wird insbesondere der technische Vorteil bewirkt, dass unerlaubte Kommandos effizient erkannt werden können. Insbesondere wird dadurch der technische Vorteil bewirkt, dass ein effizienter Schutz des Stellwerks vor unerlaubten Kommandos bewirkt werden kann.

In einer Ausführungsform ist vorgesehen, dass der Prozessor zum Überprüfen des Kommandostroms ausgebildet ist, Kommandos des Kommandostroms mit Referenzkommandos einer Negativkommandoliste zu vergleichen, um unerlaubte Kommandos zu erkennen.

Dadurch wird zum Beispiel der technische Vorteil bewirkt, dass die unerlaubten Kommandos effizient erkannt werden können. Die Negativkommandoliste bildet also eine sogenannte "black list". Kommandos, die von der Negativkommandoliste umfasst sind, sind also unerlaubte Kommandos.

Durch Anpassen der Negativkommandoliste ist es somit in vorteilhafter Weise ermöglicht, flexibel auf unterschiedliche Bedrohungsszenarien zu reagieren.

Nach einer anderen Ausführungsform ist eine Protokolleinrichtung zum Protokollieren des mitgelesenen Netzwerkverkehrs vorgesehen.

Dadurch wird zum Beispiel der technische Vorteil bewirkt, dass zu einem späteren Zeitpunkt effizient nachgewiesen werden kann, dass beispielsweise unerlaubte Kommandos an das Stellwerk gesendet wurden respektive dass den unerlaubten Kommandos entsprechende unerlaubte Bedienhandlungen erfolgreich verhindert werden konnten.

Das heißt also insbesondere, dass die Protokolleinrichtung den mitgelesenen Netzwerkverkehr aufzeichnet, also speichert.

Nach einer Ausführungsform ist vorgesehen, dass der Netzwerk-TAP ausgebildet ist, den mitgelesenen eingehenden Netzwerkverkehr an die Protokolleinrichtung auszugeben.

Gemäß einer weiteren Ausführungsform ist vorgesehen, dass der Prozessor ausgebildet ist, den mitgelesenen eingehenden Netzwerkverkehr an die Protokolleinrichtung auszugeben.

In einer anderen Ausführungsform ist vorgesehen, dass die Netztrenneinrichtung ausgebildet ist, das Stellwerk von dem Kommunikationsnetzwerk physisch zu trennen.

Dadurch wird zum Beispiel der technische Vorteil bewirkt, dass eine effiziente und sichere Trennung des Stellwerks von dem Kommunikationsnetzwerk bewirkt ist.

Das physische Trennen umfasst beispielsweise ein physisches Trennen einer Kommunikationsverbindung zwischen dem Netzwerk-TAP und dem Stellwerk.

Beispielsweise umfasst das physische Trennen ein Öffnen eines Schalters, der in einer Kommunikationsverbindung zwischen dem Kommunikationsnetzwerk und dem Stellwerk, beispielsweise zwischen dem Netzwerk-TAP und dem Stellwerk, geschaltet ist.

In einer anderen Ausführungsform ist eine Kommandoeinspeiseeinrichtung zum Einspeisen eines Testkommandos in den eingehenden Netzwerkverkehr vorgesehen, um den Prozessor zu testen. wobei der Prozessor ausgebildet ist, bei Erkennung des Testkommandos im Rahmen des Prüfens des mitgelesenen eingehenden Netzwerkverkehrs keine Ansteuerung der Netztrenneinrichtung derart durchzuführen, dass die Netztrenneinrichtung das Stellwerk von dem Kommunikationsnetzwerk trennt.

Dadurch wird insbesondere der technische Vorteil bewirkt, dass ein effizientes Testen des Prozessors ermöglicht ist. Das heißt also insbesondere, dass eine Erkennung des Testkommandos in dem eingehenden Netzwerkverkehr keine Trennung des Stellwerks von dem Kommunikationsnetzwerk zur Folge hat.

In einer Ausführungsform ist vorgesehen, dass die Kommandoeinspeiseeinrichtung ausgebildet ist, das Testkommando in vorbestimmten Zeitintervallen einzuspeisen.

Dadurch wird zum Beispiel der technische Vorteil bewirkt, dass der Prozessor effizient auch über einen längeren Zeitraum getestet werden kann.

Ein solch vorbestimmtes Zeitintervall wird beispielsweise in Abhängigkeit der Anforderungen der Applikation gewählt. Beispielsweise ist vorgesehen, dass das Testkommando ein Mal pro Sekunde oder ein Mal pro Minute oder ein Mal pro Stunde eingespeist wird. Beispielsweise wird das Zeitintervall von einem offiziellen Prüfer vorgegeben.

In einer Ausführungsform ist vorgesehen, dass der Prozessor ausgebildet ist, bei Erkennung des Testkommandos im Rahmen des Prüfens des mitgelesenen eingehenden Netzwerkverkehrs eine Erfolgsnachricht an die Kommandoeinspeiseeinrichtung zu senden, dass das Testkommando erkannt wurde, wobei die Kommandoeinspeiseeinrichtung ausgebildet ist, bei Ausbleiben einer Erfolgsnachricht nach Einspeisen des Testkommandos die Netztrenneinrichtung derart anzusteuern, dass die Netztrenneinrichtung das Stellwerk von dem Kommunikationsnetzwerk trennt.

Dadurch wird zum Beispiel der technische Vorteil bewirkt, dass ein Fehler in dem Prozessor, der zu einem Nicht-Erkennen des Testkommandos führt, keine sicherheitskritischen Auswirkungen auf einen Betrieb des Stellwerks hat. Dies deshalb, da in einem solchen Fall, also wenn eine Erfolgsnachricht ausbleibt, das Stellwerk von dem Kommunikationsnetzwerk getrennt wird.

Dadurch, dass gemäß dieser Ausführungsform die Netztrenneinrichtung mittels der Kommandoeinspeiseeinrichtung entsprechend angesteuert wird, um das Stellwerk von dem Kommunikationsnetzwerk zu trennen, wird insbesondere der technische Vorteil bewirkt, dass bei einem Fehler im Prozessor das Stellwerk dennoch von dem Kommunikationsnetzwerk getrennt werden kann.

In einer Ausführungsform ist vorgesehen, dass die Vorrichtung zum Überwachen eines an ein Stellwerk einer Eisenbahnbetriebsanlage über ein Kommunikationsnetzwerk eingehende Netzwerkverkehrs ausgebildet ist, das Verfahren zum Überwachen eines an ein Stellwerk einer Eisenbahnbetriebsanlage über ein Kommunikationsnetzwerk eingehenden Netzwerkverkehrs aus- oder durchzuführen.

In einer Ausführungsform ist vorgesehen, dass das Verfahren zum Überwachen eines an ein Stellwerk einer Eisenbahnbetriebsanlage über ein Kommunikationsnetzwerk eingehenden Netzwerkverkehrs mittels der Vorrichtung zum Überwachen eines an ein Stellwerk einer Eisenbahnbetriebsanlage über ein Kommunikationsnetzwerk eingehenden Netzwerkverkehrs aus- oder durchgeführt wird.

Nach einem weiteren Aspekt ist eine Eisenbahnbetriebsanlage bereitgestellt, welche das Stellwerk und die Vorrichtung zum Überwachen eines an ein Stellwerk einer Eisenbahnbetriebsanlage über ein Kommunikationsnetzwerk eingehenden Netzwerkverkehrs umfasst.

Technische Funktionalitäten der Vorrichtung ergeben sich analog aus entsprechenden technischen Funktionalitäten des Verfahrens und umgekehrt.

Das heißt also beispielsweise, dass sich Vorrichtungsmerkmale aus entsprechenden Verfahrensmerkmalen und umgekehrt ergeben.

Nach einer Ausführungsform umfasst das Verfahren, dass das Mitlesen des über das Kommunikationsnetzwerk an das Stellwerk eingehenden Netzwerkverkehrs mittels des Netzwerk-TAPs durchgeführt wird.

Gemäß einer Ausführungsform des Verfahrens ist vorgesehen, dass der mitgelesene eingehende Netzwerkverkehr an den Prozessor ausgegeben wird, beispielsweise mittels des Netzwerk-TAPs.

Nach einer Ausführungsform des Verfahrens ist zum Prüfen des mitgelesenen eingehenden Netzwerkverkehrs vorgesehen, einen vom mitgelesenen eingehenden Netzwerkverkehr umfassten Kommandostrom auf unerlaubte Kommandos zu überprüfen und bei einem Erkennen eines unerlaubten Kommandos die Netztrenneinrichtung derart anzusteuern, dass die Netztrenneinrichtung das Stellwerk von dem Kommunikationsnetzwerk trennt.

In einer Ausführungsform des Verfahrens ist zum Überprüfen des Kommandostroms vorgesehen, dass Kommandos des Kommandostroms mit Referenzkommandos einer Negativkommandoliste verglichen werden, um unerlaubte Kommandos zu erkennen.

In einer Ausführungsform des Verfahrens ist ein Protokollieren des mitgelesenen Netzwerkverkehrs vorgesehen.

In einer weiteren Ausführungsform des Verfahrens ist vorgesehen, dass das Stellwerk von dem Kommunikationsnetzwerk physisch getrennt wird.

In einer Ausführungsform des Verfahrens ist vorgesehen, dass das Stellwerk von dem Kommunikationsnetzwerk mittels der Netztrenneinrichtung physisch getrennt wird.

Gemäß einer Ausführungsform des Verfahrens ist ein Einspeisen eines Testkommandos in den eingehenden Netzwerkverkehr vorgesehen, um den Prozessor zu testen, wobei bei Erkennung des Testkommandos mittels des Prozessors im Rahmen des Prüfens des mitgelesenen eingehenden Netzwerkstroms der Prozessor keine Ansteuerung der Netztrenneinrichtung derart durchführt, dass die Netztrenneinrichtung das Stellwerk von dem Kommunikationsnetzwerk trennt.

In einer Ausführungsform des Verfahrens ist vorgesehen, dass der Prozessor bei Erkennung des Testkommandos im Rahmen des Prüfens des mitgelesenen eingehenden Netzwerkverkehrs eine Erfolgsnachricht an die Kommandoeinspeiseeinrichtung sendet, dass das Testkommando erkannt wurde, wobei die Kommandoeinspeiseeinrichtung bei Ausbleiben einer Erfolgsnachricht nach Einspeisen des Testkommandos die Netztrenneinrichtung derart ansteuert, dass die Netztrenneinrichtung das Stellwerk von dem Kommunikationsnetzwerk trennt.

In einer Ausführungsform ist vorgesehen, dass die Kommandoeinspeiseeinrichtung ausgebildet ist, bei Ausbleiben der Erfolgsnachricht nach Einspeisen des Testkommandos nach Ablauf einer vorbestimmten Zeitdauer die Netztrenneinrichtung derart anzusteuern, dass die Netztrenneinrichtung das Stellwerk von dem Kommunikationsnetzwerk trennt.

Das heißt also insbesondere, dass nach dieser Ausführungsform vorgesehen ist, dass die Kommandoeinspeiseeinrichtung den Ablauf der vorbestimmten Zeitdauer abwartet nach Einspeisen des Testkommandos, bevor die Netztrenneinrichtung derart angesteuert wird, dass die Netztrenneinrichtung das Stellwerk von dem Kommunikationsnetzwerk trennt, wenn die Erfolgsnachricht ausbleibt.

Wie lange mit dem Trennen nach dem Ausbleiben der Erfolgsnachricht abgewartet wird, hängt beispielsweise von der Implementierung, also vom konkreten Einzelfall, ab. Wenn beispielsweise sichergestellt werden kann, dass innerhalb eines bestimmten Zeitintervalls (der vorbestimmten Zeitdauer) unter allen möglichen Betriebsbedingungen eine Antwort erfolgen müsste, ist gemäß einer Ausführungsform vorgesehen, dass die Netztrenneinrichtung unmittelbar nach Ablauf des bestimmten Zeitintervalls derart angesteuert wird, dass die Netztrenneinrichtung das Stellwerk von dem Kommunikationsnetzwerk trennt, wenn die Erfolgsnachricht ausbleibt Gemäß einer Ausführungsform ist vorgesehen, dass das Stellwerk über einen VPN-Router mit dem Kommunikationsnetzwerk verbunden ist respektive verbindbar ist.

Das heißt also insbesondere, dass gemäß einer Ausführungsform ein VPN-Router für eine Verbindung des Stellwerks mit dem Kommunikationsnetzwerk vorgesehen ist. Das Stellwerkt ist beispielsweise mit dem VPN-Router verbunden.

In einer Ausführungsform ist vorgesehen, dass der Netzwerk-TAP zwischen dem VPN-Router und dem Stellwerk geschaltet ist.

In einer Ausführungsform ist vorgesehen, dass ein Computer eines Kontrollzentrums der Eisenbahnbetriebsanlage über das Kommunikationsnetzwerk mit dem Stellwerk verbindbar ist respektive verbunden ist.

Das heißt also beispielsweise, dass gemäß einer Ausführungsform ein Computer eines Kontrollzentrums der Eisenbahnbetriebsanlage vorgesehen ist.

In einer Ausführungsform ist vorgesehen, dass der Computer des Kontrollzentrums der Eisenbahnbetriebsanlage über einen weiteren VPN-Router mit dem Kommunikationsnetzwerk verbunden ist respektive verbindbar ist.

Das heißt also insbesondere, dass gemäß einer Ausführungsform ein weiterer VPN-Router für eine Verbindung des Computers des Kontrollzentrums mit dem Kommunikationsnetzwerk vorgesehen ist. Der Computer ist beispielsweise mit dem weiteren VPN-Router verbunden.

Das Kommunikationsnetzwerk umfasst gemäß einer Ausführungsform das Internet.

In einer Ausführungsform umfasst das Kommunikationsnetzwerk ein Mobilfunknetz.

Der Computer des Kontrollzentrums ist gemäß einer Ausführungsform als eine Workstation, beispielsweise als eine Bedien-Workstation, ausgebildet.

Über den Computer des Kontrollzentrums der Eisenbahnbetriebsanlage wird beispielsweise oder kann beispielsweise vorgegeben werden, welchen Zustand die Signale der Eisenbahnbetriebsanlage aufweisen sollen respektive welchen Zustand respektive Position eine Weiche der Eisenbahnbetriebsanlage haben soll respektive wird mittels des Computers eine Fahrtfreigabe vorgegeben. Zu den möglichen Meldungen eines Stellwerks gehören u.a. Frei- und Belegtmeldungen von Gleisabschnitten und/oder Flankenschutz von Weichen.

In einer Ausführungsform ist vorgesehen, dass der Kommandostrom in Form von PDS- und/oder SBS-Telegrammen übertragen wird.

Hierbei steht die Abkürzung "PDS" für "Prozess-DatenSchnittstelle".

Die Abkürzung "SBS" steht für "Standard-Bedien-Schnittstelle".

In einer Ausführungsform ist vorgesehen, dass der Kommandostrom ein Kommandostrom eines der folgenden Netzwerkprotokolle ist: SSH, SFTP, SMB.

Ein unerlaubtes Kommando im Sinne der Beschreibung ist beispielsweise eine Kommandofreigabe. Eine solche Kommandofreigabe bewirkt im Stellwerk ein Aufheben von Systemzuständen respektive ein Übersteuern des Stellwerks. Das heißt also insbesondere, dass es mit dem Kommando "Kommandofreigabe" ermöglicht ist, das Stellwerk zu übersteuern, um beispielsweise einen Zugbetrieb mit eingeschränkter Sicherheit fortführen zu können, sofern es beispielsweise eine Störung im Stellwerk gegeben hat, die zu einer Blockade geführt hat.

Ein Beispiel für eine solche Kommandofreigabe ist der Fall, dass, obwohl ein Signal "rot" anzeigt, ein Fahrbefehl an den Zugführer ausgegeben wird oder eine Einfahrt in einen Gleisabschnitt freigegeben wird, obwohl der Gleisabschnitt bereits als besetzt angezeigt wird. Dieser Fahrbefehl entspricht hier der Kommandofreigabe. Es wird also die Sicherheitsüberwachung außer Kraft gesetzt.

Ursachen für die Notwendigkeit einer solchen Kommandofreigabe sind beispielsweise defekte Gleisfreimeldungen, die von einem Bediener an einer Workstation mittels KF-Kommando (KF = Kommandofreigabe) gesondert kommandiert und im Stellwerk übersteuert werden.

Gemäß einer Ausführungsform umfasst eine Vorrichtung zum Überwachen eines an ein Stellwerk einer Eisenbahnbetriebsanlage über ein Kommunikationsnetzwerk eingehenden Netzwerkverkehrs das Stellwerk.

In einer Ausführungsform umfasst eine Vorrichtung zum Überwachen eines an ein Stellwerk einer Eisenbahnbetriebsanlage über ein Kommunikationsnetzwerk eingehenden Netzwerkverkehrs nicht das Stellwerk.

In einer Ausführungsform ist vorgesehen, dass nach Ablauf einer weiteren vorbestimmten Zeitdauer das Stellwerk wieder mit dem Kommunikationsnetzwerk verbunden wird. Bei Kommandoströmen gemäß PDS, SBS ist die weitere vorbestimmte Zeitdauer beispielsweise größer als 1 Minute, beispielsweise größer als 2 Minuten. Innerhalb dieser weiteren vorbestimmten Zeitdauer muss gemäß einer Ausführungsform eine KF Handlung abgeschlossen sein, ansonsten wird diese als ungültig erkannt.

Das heißt also beispielsweise, dass die Netztrenneinrichtung ausgebildet ist, nach Ablauf einer weiteren vorbestimmten Zeitdauer das Stellwerk wieder mit dem Kommunikationsnetzwerk zu verbinden.

Das heißt also beispielsweise, dass der Prozessor ausgebildet ist, die Netztrenneinrichtung nach Ablauf einer weiteren vorbestimmten Zeitdauer derart anzusteuern, dass diese das Stellwerk mit dem Kommunikationsnetzwerk wieder verbindet.

Nach einer Ausführungsform ist vorgesehen, dass die Netztrenneinrichtung ausgebildet ist, das Stellwerk reversibel von dem Kommunikationsnetzwerk zu trennen.

In einer Ausführungsform ist vorgesehen, dass die Netztrenneinrichtung ausgebildet ist, das Stellwerk irreversibel von dem Kommunikationsnetzwerk zu trennen.

Um also beispielsweise bei einer irreversiblen Trennung mittels der Netztrenneinrichtung das Stellwerk wieder mit dem Kommunikationsnetzwerk zu verbinden, muss beispielsweise die Netztrenneinrichtung ausgetauscht werden.

Die Formulierung "respektive" umfasst insbesondere die Formulierung "und/oder".

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
FIG 1 eine erste Vorrichtung zum Überwachen eines an ein Stellwerk einer Eisenbahnbetriebsanlage über ein Kommunikationsnetzwerk eingehenden Netzwerkverkehrs,
FIG 2 eine zweite Vorrichtung zum Überwachen eines an ein Stellwerk einer Eisenbahnbetriebsanlage über ein Kommunikationsnetzwerk eingehenden Netzwerkverkehrs,
FIG 3 eine dritte Vorrichtung zum Überwachen eines an ein Stellwerk einer Eisenbahnbetriebsanlage über ein Kommunikationsnetzwerk eingehenden Netzwerkverkehrs und
FIG 4 ein Ablaufdiagramm eines Verfahrens zum Überwachen eines an ein Stellwerk einer Eisenbahnbetriebsanlage über ein Kommunikationsnetzwerk eingehenden Netzwerkverkehrs zeigen.

Im Folgenden können für gleiche Merkmale gleiche Bezugszeichen verwendet werden.

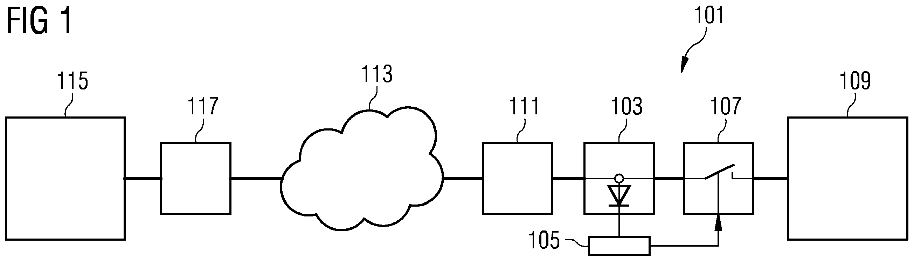

FIG 1 zeigt eine erste Vorrichtung 101 zum Überwachen eines an ein Stellwerk einer Eisenbahnbetriebsanlage über ein Kommunikationsnetzwerk eingehenden Netzwerkverkehrs.

Die erste Vorrichtung 101 umfasst:
einen Netzwerk-TAP 103 zum Mitlesen des über das Kommunikationsnetzwerk an das Stellwerk eingehenden Netzwerkverkehrs und zum Ausgeben des mitgelesenen eingehenden Netzwerkverkehrs an einen Prozessor 105 zum Prüfen des mitgelesenen eingehenden Netzwerkverkehrs,
eine Netztrenneinrichtung 107 zum Trennen des Stellwerks von dem Kommunikationsnetzwerk,
wobei der Prozessor 105 ausgebildet ist, basierend auf einem Ergebnis des Prüfens des mitgelesenen eingehenden Netzwerkverkehrs die Netztrenneinrichtung 107 derart anzusteuern, dass die Netztrenneinrichtung 107 das Stellwerk von dem Kommunikationsnetzwerk trennt.

FIG 1 zeigt weiter ein Stellwerk 109 einer Eisenbahnbetriebsanlage (nicht weiter im Detail gezeigt), welches über einen VPN-Router 111 mit einem Kommunikationsnetzwerk 113 verbunden ist.

Das Kommunikationsnetzwerk 113 ist gemäß einer Ausführungsform das Internet.

Weiter zeigt die FIG 1 eine Bedien-Workstation 115 eines hier nicht weiter gezeigten Kontrollzentrums der Eisenbahnbetriebsanlage.

Die Bedien-Workstation 115 ist über einen weiteren VPN-Router 117 mit dem Kommunikationsnetzwerk 113 verbunden.

An dieser Stelle wird angemerkt, dass der weitere VPN-Router 117, das Internet als ein mögliches Kommunikationsnetzwerk 113 und der VPN-Router 111 gemäß einer Ausführungsform nicht zwingend erforderlich sind. Die Vorrichtung 101 ist gemäß einer Ausführungsform im lokalen Netz eines Kunden installiert und muss also beispielsweise nicht zwingend über das Internet und VPN-Router an das Stellwerk 109 angebunden sein.

Der Netzwerk-TAP 103 ist zwischen dem VPN-Router 111 und dem Stellwerk 109 geschaltet.

Weiter ist die Netztrenneinrichtung 107 zwischen dem Netzwerk-TAP 103 und dem Stellwerk 109 geschaltet.

Eine beispielhafte Funktionsweise der ersten Vorrichtung 101 wird nachfolgend beschrieben:
Der Netzwerk-TAP 103 liest einen Kommandostrom, der vom VPN-Router 111 an das Stellwerk 109 gesendet wird, mit und gibt den mitgelesenen Kommandostrom an den Prozessor 105 aus. Der Netzwerk-TAP 103 liest also den an das Stellwerk 109 eingehenden Netzwerkverkehr (Kommandostrom) mit.
Der Prozessor 105 überprüft den Kommandostrom, der gemäß einer Ausführungsform in Form von PDS- und/oder SBS-Telegrammen übertragen wird, auf unerlaubte Kommandos respektive unerlaubte Kommandosequenzen respektive unerlaubte Kommandotypen, beispielsweise eine Kommandofreigabe.

Erkennt der Prozessor 105 einen solchen Kommandotyp respektive Kommandosequenz respektive ein unerlaubtes Kommando, steuert der Prozessor 105 die Netztrenneinrichtung 107 derart an, dass die Netztrenneinrichtung 107 die Netzwerkverbindung zwischen dem Netzwerk-TAP 103 und dem Stellwerk 109 trennt. Dadurch wird das Stellwerk 109 von dem Kommunikationsnetzwerk 113 getrennt.

Üblicherweise ist es so, dass Bedienhandlungen, die unter Verwendung der Bedien-Workstation 115 vorgenommen werden und sich auf einen Zustand eines Eisenbahnabschnitts (nicht gezeigt) der Eisenbahnbetriebsanlage auswirken, durch das Stellwerk 109, das für die Sicherheit die Verantwortung übernimmt, überwacht werden, bevor eine Änderung an Signalen respektive Fahrstraßen respektive Fahrtfreigaben stattfindet. Dies gilt üblicherweise für alle Kommandos bis auf die, die mit "Kommandofreigabe" bezeichnet werden. Solche Kommandos übersteuern das Stellwerk 109.

Durch das Vorsehen solcher "Kommandofreigaben" soll es im Fall einer Störung möglich sein, einen Zugbetrieb mit eingeschränkter Sicherheit fortzuführen und gegebenenfalls Systemzustände im Stellwerk 109 aufzuheben, die zu einer Blockade geführt haben.

Dadurch können allerdings Sicherheitsfunktionen, die im Stellwerk 109 eingebaut sind, umgangen werden, was eine erhöhte Gefährdung im Fall einer willentlichen oder unbeabsichtigten Fehlbedienung darstellen kann. Dies gilt beispielsweise vor allem dann, wenn solche Kommandos über eine Fernbedienung willentlich oder unwillentlich ausgelöst werden können.

Da jedoch die Fernverbindung, also beispielsweise die Verbindung zwischen der Bedien-Workstation 115 und dem Stellwerk 109 lediglich für eine Lageüberwachung eingerichtet respektive ausgebildet wird respektive ist und insbesondere nicht für eine Ausführung von Kommandofreigabebefehlen vorgesehen ist, gilt es zu verhindern, dass Kommandierungen des Typs "Kommandofreigabe" entweder vollständig respektive mindestens deren Wirkung unterbunden werden. Hierbei ist insbesondere darauf zu achten, dass eine Überwachungseinrichtung nicht außer Funktion gesetzt wird.

Im Zuge einer neuen Sicherheitsgesetzgebung werden hier hohe zusätzliche Schutzmaßnahmen und zur gleichen Zeit aber von Kundenseite neue Funktionalitäten eingefordert. Dieser Situation von zwei sich widersprechenden Anforderungen wird mit dem erfindungsgemäßen Konzept Rechnung getragen.

Dies deshalb, da über den Netzwerk-TAP 103 der Kommandostrom, der beispielsweise von der Bedien-Workstation 115 über das Kommunikationsnetzwerk 113 an das Stellwerk 109 gesendet wird, mitgelesen und an den Prozessor 105 zwecks Prüfen ausgegeben wird. Der Prozessor 105 kann somit in vorteilhafter Weise diesen Kommandostrom auf Kommandos des Typs "Kommandofreigabe" überprüfen und bei einer Erkennung eines solchen Kommandos die Netztrenneinrichtung 107 aktivieren.

Dadurch wird also insbesondere der technische Vorteil bewirkt, dass durch eine entsprechend willentliche oder unbeabsichtigte Fehlbedienung keine erhöhte Gefährdung stattfindet, zumindest kann ein entsprechendes Risiko reduziert werden.

Dadurch, dass der Netzwerk-TAP 103 im Netzwerk nicht sichtbar ist, kann dieser nicht angegriffen werden und gegebenenfalls außer Funktion gesetzt werden.

Somit kann das Stellwerk 109 über das Kommunikationsnetzwerk 113 erreichbar sein, was beispielsweise von Kundenseite eingefordert wird.

Zur gleichen Zeit werden aber auch hier von der neuen Sicherheitsgesetzgebung geforderte zusätzliche Schutzmaßnahmen effizient umgesetzt.

Somit können erfindungsgemäß zwei sich eigentlich widersprechende Anforderungen dennoch erfüllt werden.

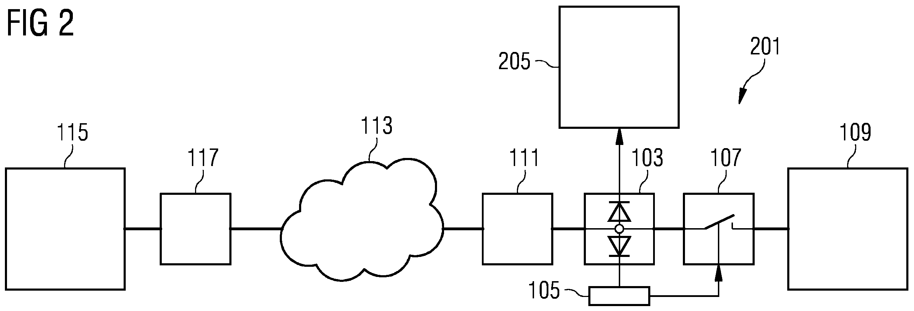

FIG 2 zeigt eine zweite Vorrichtung 201 zum Überwachen eines an ein Stellwerk einer Eisenbahnbetriebsanlage über ein Kommunikationsnetzwerk eingehenden Netzwerkverkehrs.

Die zweite Vorrichtung 201 ist im Wesentlichen analog zur ersten Vorrichtung 101 gemäß FIG 1 ausgebildet.

Zusätzlich zu der Vorrichtung 101 gemäß FIG 1 umfasst die zweite Vorrichtung 201 eine Protokolleinrichtung 205 zum Protokollieren des mitgelesenen Netzwerkverkehrs.

Der Netzwerk-TAP 103 ist insofern ausgebildet, den mitgelesenen Netzwerkverkehr an die Protokolleinrichtung 205 auszugeben.

Die weiteren in FIG 2 gezeigten Elemente und deren Funktionsweise sind identisch zu den in FIG 1 gezeigten Elementen respektive deren Funktionsweisen. Auf die vorstehend gemachten Ausführungen wird zur Vermeidung von Wiederholungen verwiesen.

Mittels der Protokolleinrichtung 205 ist es in vorteilhafter Weise ermöglicht, auch zu einem späteren Zeitpunkt nachweisen zu können, ob der Kommandostrom unerlaubte Kommandos umfasste.

Beispielsweise ist vorgesehen, dass die Protokolleinrichtung 205 ausgebildet ist, eine Trennung des Stellwerks 109 von dem Kommunikationsnetzwerk 113 zu protokollieren.

Ein Protokollieren umfasst beispielsweise ein Speichern.

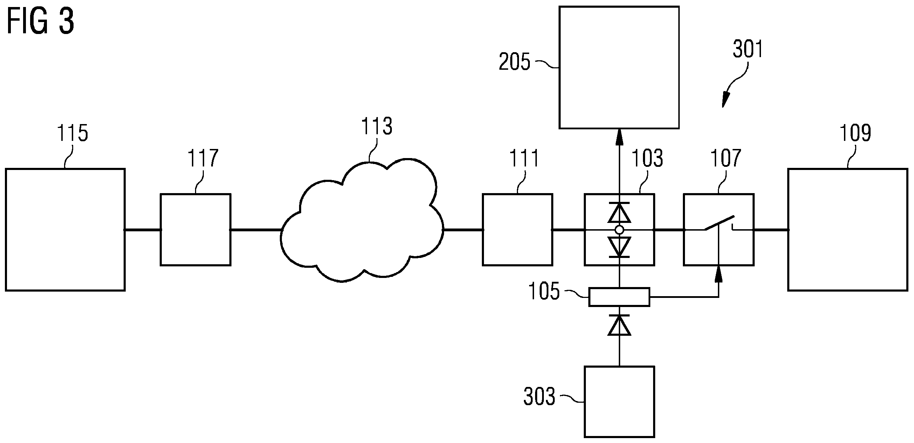

FIG 3 zeigt eine dritte Vorrichtung 301 zum Überwachen eines an ein Stellwerk einer Eisenbahnbetriebsanlage über ein Kommunikationsnetzwerk eingehenden Netzwerkverkehrs.

Die dritte Vorrichtung 301 ist im Wesentlichen analog zur zweiten Vorrichtung 201 gemäß FIG 2 ausgebildet.

Zusätzlich zu der in FIG 2 gezeigten zweiten Vorrichtung 201 umfasst die dritte Vorrichtung 301 gemäß FIG 3 noch eine Kommandoeinspeiseeinrichtung 303 zum Einspeisen eines Testkommandos in den eingehenden Netzwerkverkehr, um den Prozessor 105 zu testen.

Gemäß dieser Ausführungsform ist der Prozessor 105 dann ausgebildet, bei Erkennung des Testkommandos im Rahmen des Prüfens des mitgelesenen eingehenden Netzwerkverkehrs keine Ansteuerung der Netztrenneinrichtung 107 derart durchzuführen, dass die Netztrenneinrichtung 107 das Stellwerk 109 von dem Kommunikationsnetzwerk 113 trennt.

In einer Ausführungsform ist vorgesehen, dass die dritte Vorrichtung 301 nicht die Protokolleinrichtung 205 umfasst. Gemäß dieser Ausführungsform ist dann die dritte Vorrichtung 301 im Wesentlichen analog zur ersten Vorrichtung 101 gemäß FIG 1 ausgebildet. Gemäß dieser Ausführungsform umfasst dann die dritte Vorrichtung 301 zusätzlich zu der in FIG 1 gezeigten ersten Vorrichtung 101 die Kommandoeinspeiseeinrichtung 303.

In einer Ausführungsform ist vorgesehen, dass der Prozessor 105 ausgebildet ist, bei Erkennung des Testkommandos im Rahmen des Prüfens des mitgelesenen eingehenden Netzwerkverkehrs eine Erfolgsnachricht an die Kommandoeinspeiseeinrichtung 303 zu senden, dass das Testkommando erkannt wurde, wobei die Kommandoeinspeiseeinrichtung 303 ausgebildet ist, bei Ausbleiben einer Erfolgsnachricht nach Einspeisen des Testkommandos, insbesondere bei Ausbleiben einer Erfolgsnachricht nach Einspeisen des Testkommandos nach Ablauf einer vorbestimmten Zeitdauer, beispielsweise maximal 3 s, die Netztrenneinrichtung 107 derart anzusteuern, dass die Netztrenneinrichtung 107 das Stellwerk 109 von dem Kommunikationsnetzwerk 113 trennt.

Gemäß einer Ausführungsform umfasst eine Vorrichtung zum Überwachen eines an ein Stellwerk einer Eisenbahnbetriebsanlage über ein Kommunikationsnetzwerk eingehenden Netzwerkverkehrs das Stellwerk.

In einer Ausführungsform umfasst eine Vorrichtung zum Überwachen eines an ein Stellwerk einer Eisenbahnbetriebsanlage über ein Kommunikationsnetzwerk eingehenden Netzwerkverkehrs nicht das Stellwerk.

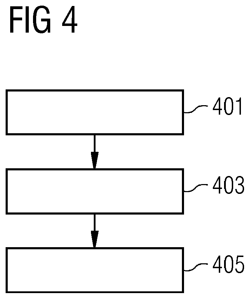

FIG 4 zeigt ein Ablaufdiagramm eines Verfahrens zum Überwachen eines an ein Stellwerk einer Eisenbahnbetriebsanlage über ein Kommunikationsnetzwerk eingehenden Netzwerkverkehrs, umfassend die folgenden Schritte:
Mitlesen 401 des über das Kommunikationsnetzwerk an das Stellwerk eingehenden Netzwerkverkehrs,
Prüfen 403 des mitgelesenen eingehenden Netzwerkverkehrs, Trennen 405 des Stellwerks von dem Kommunikationsnetzwerk basierend auf einem Ergebnis des Prüfens des mitgelesenen eingehenden Netzwerkverkehrs.

Nach einer Ausführungsform ist vorgesehen, dass das in FIG 4 gezeigte und beschriebene Verfahren mittels einer der drei Vorrichtungen 101, 201, 303 durch- oder ausgeführt wird.

Das heißt also beispielsweise, dass das Mitlesen 401 mittels des Netzwerk-TAPs 103 durchgeführt wird.

Der Netzwerk-TAP 103 gibt beispielsweise den mitgelesenen Netzwerkverkehr an den Prozessor 105 aus.

Das Prüfen 403 wird beispielsweise mittels des Prozessors 105 durchgeführt.

Das Trennen 405 wird beispielsweise mittels der Netztrenneinrichtung 107 durchgeführt. Hierfür steuert der Prozessor 105 die Netztrenneinrichtung 107 entsprechend an.

In einer Ausführungsform ist vorgesehen, dass nach Ablauf einer vorbestimmten Zeitdauer das Stellwerk 109 wieder mit dem Kommunikationsnetzwerk 113 verbunden wird.

Das heißt also beispielsweise, dass die Netztrenneinrichtung 107 ausgebildet ist, nach Ablauf einer vorbestimmten Zeitdauer das Stellwerk 109 wieder mit dem Kommunikationsnetzwerk 113 zu verbinden.

Das heißt also beispielsweise, dass der Prozessor 105 ausgebildet ist, nach Ablauf einer vorbestimmten Zeitdauer das Stellwerk 109 mit dem Kommunikationsnetzwerk 113 zu verbinden.

Nach einer Ausführungsform ist vorgesehen, dass die Netztrenneinrichtung 107 ausgebildet ist, das Stellwerk 109 reversibel von dem Kommunikationsnetzwerk 113 zu trennen.

In einer Ausführungsform ist vorgesehen, dass die Netztrenneinrichtung 107 ausgebildet ist, das Stellwerk 109 irreversibel von dem Kommunikationsnetzwerk 113 zu trennen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (101, 201, 301) zum Überwachen eines an ein Stellwerk (109) einer Eisenbahnbetriebsanlage über ein Kommunikationsnetzwerk eingehenden Netzwerkverkehrs,
gekennzichnet durch
einen Netzwerk-TAP (103) zum Mitlesen des über das Kommunikationsnetzwerk (113) an das Stellwerk (109) eingehenden Netzwerkverkehrs und zum Ausgeben des mitgelesenen eingehenden Netzwerkverkehrs an einen Prozessor (105) zum Prüfen des mitgelesenen eingehenden Netzwerkverkehrs und
eine Netztrenneinrichtung (107) zum Trennen des Stellwerks (109) von dem Kommunikationsnetzwerk (113),
wobei der Prozessor (105) ausgebildet ist, basierend auf einem Ergebnis des Prüfens des mitgelesenen eingehenden Netzwerkverkehrs die Netztrenneinrichtung (107) derart anzusteuern, dass die Netztrenneinrichtung (107) das Stellwerk (109) von dem Kommunikationsnetzwerk (113) trennt undwobei der Prozessor (105) zum Prüfen des mitgelesenen eingehenden Netzwerkverkehrs ausgebildet ist, einen vom mitgelesenen eingehenden Netzwerkverkehr umfassten Kommandostrom auf unerlaubte Kommandos zu überprüfen und bei einem Erkennen eines unerlaubten Kommandos die Netztrenneinrichtung (107) derart anzusteuern, dass die Netztrenneinrichtung (107) das Stellwerk (109) von dem Kommunikationsnetzwerk (113) trennt.

2. Vorrichtung (101, 201, 301) nach Anspruch 1, wobei der Prozessor (105) zum Überprüfen des Kommandostroms ausgebildet ist, Kommandos des Kommandostroms mit Referenzkommandos einer Negativkommandoliste zu vergleichen, um unerlaubte Kommandos zu erkennen.

3. Vorrichtung (101, 201, 301) nach einem der vorherigen Ansprüche, umfassend eine Protokolleinrichtung (205) zum Protokollieren des mitgelesenen Netzwerkverkehrs.

4. Vorrichtung (101, 201, 301) nach einem der vorherigen Ansprüche, wobei die Netztrenneinrichtung (107) ausgebildet ist, das Stellwerk (109) von dem Kommunikationsnetzwerk (113) physisch zu trennen.

5. Vorrichtung (101, 201, 301) nach einem der vorherigen Ansprüche, umfassend eine Kommandoeinspeiseeinrichtung (303) zum Einspeisen eines Testkommandos in den eingehenden Netzwerkverkehr, um den Prozessor (105) zu testen. wobei der Prozessor (105) ausgebildet ist, bei Erkennung des Testkommandos im Rahmen des Prüfens des mitgelesenen eingehenden Netzwerkverkehrs keine Ansteuerung der Netztrenneinrichtung (107) derart durchzuführen, dass die Netztrenneinrichtung (107) das Stellwerk (109) von dem Kommunikationsnetzwerk (113) trennt.

6. Vorrichtung (101, 201, 301) nach Anspruch 5, wobei der Prozessor (105) ausgebildet ist, bei Erkennung des Testkommandos im Rahmen des Prüfens des mitgelesenen eingehenden Netzwerkverkehrs eine Erfolgsnachricht an die Kommandoeinspeiseeinrichtung (303) zu senden, dass das Testkommando erkannt wurde, wobei die Kommandoeinspeiseeinrichtung (303) ausgebildet ist, bei Ausbleiben einer Erfolgsnachricht nach Einspeisen des Testkommandos die Netztrenneinrichtung (107) derart anzusteuern, dass die Netztrenneinrichtung (107) das Stellwerk (109) von dem Kommunikationsnetzwerk (113) trennt.

7. Verfahren zum Überwachen eines an ein Stellwerk (109) einer Eisenbahnbetriebsanlage über ein Kommunikationsnetzwerk (113) eingehenden Netzwerkverkehrs,
gekennzeichnt durch
die folgenden Schritte:
Mitlesen (401) des über das Kommunikationsnetzwerk (113) an das Stellwerk (109) eingehenden Netzwerkverkehrs,
Prüfen (403) des mitgelesenen eingehenden Netzwerkverkehrs und
Trennen (405) des Stellwerks (109) von dem Kommunikationsnetzwerk (113) basierend auf einem Ergebnis des Prüfens des mitgelesenen eingehenden Netzwerkverkehrs,
wobei ein Prozessor (105) zum Prüfen des mitgelesenen eingehenden Netzwerkverkehrs einen vom mitgelesenen eingehenden Netzwerkverkehr umfassten Kommandostrom auf unerlaubte Kommandos überprüft und bei einem Erkennen eines unerlaubten Kommandos eine Netztrenneinrichtung (107) derart ansteuert, dass die Netztrenneinrichtung (107) das Stellwerk (109) von dem Kommunikationsnetzwerk (113) trennt.

8. Verfahren nach Anspruch 7, wobei nach einem Trennen des Stellwerks (109) von dem Kommunikationsnetzwerk (113) das Stellwerk (109) nach Ablauf einer weiteren vorbestimmten Zeitdauer wieder mit dem Kommunikationsnetzwerk (113) verbunden wird.

9. Computerprogramm, umfassend Programmcode zur Durchführung des Verfahrens nach Anspruch 7 oder 8, wenn das Computerprogramm auf einem Computer ausgeführt wird.

## Claims

1. Apparatus (101, 201, 301) for monitoring a network traffic arriving at a signal box (109) of a railway operating system via a communication network,
**characterised by**
a network TAP (103) for reading the network traffic arriving at the signal box (109) via the communication network (113) and for outputting the read arriving network traffic to a processor (105) for checking the read arriving network traffic and
a network separating device (107) for separating the signal box (109) from the communication network (113),
wherein the processor (105) is configured, on the basis of a result of the checking of the read arriving network traffic to control the network separating device (107) such that the network separating device (107) separates the signal box (109) from the communication network (113) and wherein the processor (105) for checking the read arriving network traffic is configured to check a command stream included by the read arriving network traffic for disallowed commands and, on recognition of a disallowed command, to control the network separating device (107) such that the network separating device (107) separates the signal box (109) from the communication network (113).

2. Apparatus (101, 201, 301) according to claim 1, wherein the processor (105) for checking the command stream is configured to compare commands of the command stream with reference commands of a negative command list, in order to recognise disallowed commands.

3. Apparatus (101, 201, 301) according to one of the preceding claims, comprising a log device (205) for logging the read network traffic.

4. Apparatus (101, 201, 301) according to one of the preceding claims, wherein the network separating device (107) is configured to separate the signal box (109) physically from the communication network (113).

5. Apparatus (101, 201, 301) according to one of the preceding claims, comprising a command feed device (303) for feeding a test command into the arriving network traffic in order to test the processor (105), wherein the processor (105) is configured, on recognition of the test command in the context of the checking of the read arriving network traffic, to carry out no control of the network separating device (107) such that the network separating device (107) separates the signal box (109) from the communication network (113).

6. Apparatus (101, 201, 301) according to claim 5, wherein the processor (105) is configured, on recognition of the test command in the context of the checking of the read arriving network traffic, to send a success message to the command feed device (303) that the test command has been recognised, wherein the command feed device (303) is configured, in the absence of a success message after feeding in of the test command to control the network separating device (107) such that the network separating device (107) separates the signal box (109) from the communication network (113).

7. Method for monitoring a network traffic arriving at a signal box (109) of a railway operating system via a communication network (113),
**characterised by**
the following steps:
reading (401) the network traffic arriving at the signal box (109) via the communication network (113),
checking (403) the read arriving network traffic, and
separating (405) the signal box (109) from the communication network (113) on the basis of a result of the checking of the read arriving network traffic,
wherein a processor (105) for checking the read arriving network traffic checks a command stream included by the read arriving network traffic for disallowed commands and, on recognition of a disallowed command, controls a network separating device (107) such that the network separating device (107) separates the signal box (109) from the communication network (113).

8. Method according to claim 7, wherein after a separation of the signal box (109) from the communication network (113), after the expiry of a further pre-determined timespan, the signal box (109) is again connected to the communication network (113).

9. Computer program comprising program code for carrying out the method according to claim 7 or 8 when the computer program is carried out on a computer.

## Revendications

1. Système (101, 201, 301) de contrôle d'un trafic de réseau entrant par un réseau de communication dans un poste (109) d'aiguillage d'une installation d'exploitation de chemin de fer,
**caractérisé par**
un TAP (103) de réseau pour lire le trafic du réseau entrant dans le poste (109) d'aiguillage par le réseau (113) de communication et pour émettre le trafic de réseau entrant qui a été lu vers un processeur (105) de contrôle du trafic du réseau entrant qui a été lu et
un dispositif (107) de séparation de réseau pour séparer le poste (109) d'aiguillage du réseau (113) de communication,
dans lequel le processeur (105) est constitué pour, sur la base d'un résultat du contrôle du trafic du réseau entrant qui a été lu, commander le dispositif (107) de séparation de réseau de manière à ce que le dispositif (107) de séparation de réseau sépare le poste (109) d'aiguillage du réseau (113) de communication et dans lequel le processeur (105) est constitué pour contrôler le trafic de réseau entrant qui a été lu pour contrôler qu'il n'y a pas d'instruction non autorisée dans un flux d'instruction compris par le trafic de réseau entrant qui a été lu et pour, lorsqu'une instruction non autorisée est détectée, commander le dispositif (107) de séparation de réseau de manière à ce que le dispositif (107) de séparation de réseau sépare le poste (109) d'aiguillage du réseau (113) de communication.

2. Système (101, 201, 301) suivant la revendication 1, dans lequel le processeur (105) est constitué pour contrôler le flux d'instruction pour comparer des instructions du flux d'instruction à des instructions de référence d'une liste d'instruction négative afin de détecter des instructions qui ne sont pas autorisées.

3. Système (101, 201, 301) suivant l'une des revendications précédentes, comprenant un dispositif (205) de consigne pour consigner le trafic du réseau qui a été lu.

4. Système (101, 201, 301) suivant l'une des revendications précédentes, dans lequel le dispositif (107) de séparation de réseau sépare physiquement le poste d'aiguillage (109) du réseau (113) de communication.

5. Système (101, 201, 301) suivant l'une des revendications précédentes, comprenant un dispositif (303) d'injection d'instruction pour injecter une instruction de test dans le trafic de réseau entrant afin de tester le processeur (105), dans lequel le processeur (105) est constitué pour, à la détection de l'instruction de test, ne pas effectuer, dans le cadre du contrôle du trafic du réseau entrant qui a été lu, de commande du dispositif (107) de séparation de réseau de manière à ce que le dispositif (107) de séparation de réseau sépare le poste (109) d'aiguillage du réseau (113) de communication.

6. Système (101, 201, 301) suivant la revendication 5, dans lequel le processeur (105) est constitué pour, à la détection de l'instruction de test, envoyer, dans le cadre du contrôle du trafic du réseau entrant qui a été lu, un message de succès au dispositif (303) d'injection d'instruction suivant lequel l'instruction de test a été détectée, dans lequel le dispositif (303) d'injection d'instruction est constitué pour, s'il n'y a pas un message de succès, après l'injection de l'instruction de test, commander le dispositif (107) de séparation de réseau de manière à ce que le dispositif (107) de séparation de réseau sépare le poste (109) d'aiguillage du réseau (113) de communication.

7. Procédé de contrôle d'un trafic de réseau entrant dans un poste (109) d'aiguillage d'une installation d'exploitation de chemin de fer par un réseau (113) de communication,
**caractérisé par**
les stades suivants :
la lecture (401) du trafic du réseau entrant dans le poste (109) d'aiguillage par le réseau (113) de communication,
le contrôle (403) du trafic du réseau entrant qui a été lu et
la séparation (405) du poste (109) d'aiguillage du réseau (113) de communication sur la base d'un résultat du contrôle du trafic de réseau entrant qui a été lu,
dans lequel un processeur (105) de contrôle du trafic de réseau entrant qui a été lu contrôle un flux d'instruction compris par le trafic du réseau entrant qui a été lu pour savoir s'il y a des instructions qui ne sont pas autorisées et, à la détection d'une instruction qui n'est pas autorisée, commande un dispositif (107) de séparation de réseau de manière à ce que le dispositif (107) de séparation de réseau sépare le poste (109) d'aiguillage du réseau (113) de communication.

8. Procédé suivant la revendication 7, dans lequel après une séparation du poste (109) d'aiguillage du réseau (113) de communication, on relie à nouveau le poste (109) d'aiguillage au réseau (113) de communication après expiration d'une autre durée définie à l'avance.

9. Programme d'ordinateur comprenant un code de programme pour effectuer le procédé suivant la revendication 7 ou 8, lorsque le programme d'ordinateur est réalisé sur un ordinateur.
